# FASCICULE DE BREVET EUROPEEN

(11) **EP 2 989 352 B1**
(45) Date de publication et mention de la délivrance du brevet: **01.07.2020**
(21) Numéro de dépôt: 14722690.6
(22) Date de dépôt: 24.03.2014
(51) Int. Cl.: F16H 61/4096, B60K 6/12, F16H 47/04

(54) **CHAINE DE TRACTION POUR UN VEHICULE HYBRIDE HYDRAULIQUE ET VÉHICULE AUTOMOBILE HYBRIDE**
ANTRIEBSSTRANG FÜR HYDRAULISCHES HYBRIDFAHRZEUG UND HYBRIDFAHRZEUG
DRIVE TRAIN FOR HYDRAULIC HYBRID VEHICLE AND HYBRID VEHICLE

(30) Priorité: 25.04.2013 FR 1353790
(43) Date de publication de la demande: 02.03.2016
(73) Titulaire: Technoboost, 75116 Paris (FR)
(72) Inventeur: YARCE, Andres, F-92000 Nanterre (FR); ROY, Franck, F-91700 Fleury Merogis (FR); GIANNONI, Marc, F-75009 Paris (FR); ROUSS, Vicky, F-92800 Puteaux (FR)
(74) Mandataire: Fernandez, Francis Lionel
(86) Numéro de dépôt international: PCT/FR2014/050677
(87) Numéro de publication internationale: WO 2014/174167

(56) Documents cités:
- EP-A1- 0 094 664
- DE-A1- 2 153 960
- DE-A1-102010 036 817
- JP-A- 2009 097 646
- US-A- 4 364 229

## Description

La présente invention concerne une chaîne de traction pour un véhicule automobile hybride, ainsi qu'un véhicule automobile hybride comportant une telle chaîne de traction.

Le document JP 2009 097646 A décrit une chaîne de traction pour un véhicule automobile hybride, comprenant un moteur thermique, une machine hydraulique et une pompe hydraulique connectées par un circuit hydraulique à un accumulateur haute pression, et une transmission comportant un différentiel de sortie, deux trains planétaires, et plusieurs manchons à crabots.

Un autre
type de transmission connu pour un véhicule automobile hybride hydraulique, présenté notamment par le document FR-A1-2973302, comporte une première entrée liée à une machine hydraulique, une deuxième entrée liée à un moteur thermique et une troisième entrée liée à une pompe hydraulique, ainsi qu'une sortie par un différentiel entraînant les deux roues motrices du véhicule.

La machine hydraulique peut être reliée au différentiel par deux rapports de démultiplication différents, commandés par un premier manchon de synchronisation.

Le moteur thermique entraîne la couronne extérieure d'un train planétaire, comprenant un pignon solaire relié à la pompe hydraulique. Le porte-satellites du train planétaire peut être lié au pignon solaire par un deuxième manchon de synchronisation, afin de réaliser un blocage de ce train planétaire. Le porte-satellites peut aussi être relié au différentiel de sortie par un troisième manchon de synchronisation.

La machine hydraulique ainsi que la pompe sont connectés à des accumulateurs de pression, qui permettent de stocker une énergie lors du fonctionnement de cette pompe délivrant un couple de freinage, et de la restituer à la machine hydraulique pour délivrer un couple moteur sur les roues motrices. Le niveau de pression dans les accumulateurs varie entre un niveau minimum à partir duquel la pompe peut les recharger, et un niveau maximum admissible qui ne peut être dépassé.

On obtient ainsi en engageant l'un des deux rapports de démultiplication commandés par le premier manchon de synchronisation, une traction du véhicule par la machine hydraulique.

Pour réaliser un rapport de marche arrière, la transmission utilise uniquement la machine hydraulique qui est commandée pour tourner à l'envers, un des deux rapports de démultiplication étant engagé. Dans le cas où l'on veut obtenir un couple élevé sur les roues motrices lors d'une marche arrière, par exemple lors d'un démarrage du véhicule sur une montée, on utilise le rapport donnant la démultiplication la plus importante.

Toutefois le couple délivré par la machine hydraulique est limité par la pression hydraulique que peut fournir les accumulateurs de pression. Ce niveau de pression, et donc le couple délivré, peut dans certains cas être insuffisant pour démarrer le véhicule, notamment quand la pression dans les accumulateurs est relativement basse à l'intérieur de l'écart autorisé.

On peut alors pour remonter le niveau de pression dans les accumulateurs, engager le deuxième manchon de synchronisation afin de bloquer le train planétaire, en laissant désengager le troisième manchon de synchronisation, et démarrer le moteur thermique afin d'assurer un entraînement direct de la pompe hydraulique par le moteur thermique, sans entraîner le différentiel.

Toutefois la pression hydraulique dans les accumulateurs remontant progressivement suivant leurs recharges, le couple délivré par la machine hydraulique augmente aussi en fonction de cette montée. Un couple élevé peut ne pas être disponible rapidement.

De plus une fois le niveau maximum de charge de l'accumulateur atteint, le couple délivré par la machine hydraulique est limité à celui correspondant à ce niveau maximum. Ce couple maximum délivré peut être toujours insuffisant.

La présente invention a notamment pour but d'éviter ces inconvénients de la technique antérieure.

Elle propose à cet effet une chaîne de traction pour un véhicule automobile hybride selon la revendication 1.

Un avantage de cette chaîne de traction est qu'en réalisant le passage direct entre la pompe et la machine hydraulique, et la fermeture des accumulateurs haute pression, et en entraînant la pompe par le moteur thermique indépendamment de la vitesse du différentiel, on obtient très rapidement une pression élevée directement délivrée à la machine hydraulique par le circuit, pouvant être supérieure à la pression maximum admissible des accumulateurs haute pression, afin de générer sans délai avec cette machine un couple de marche arrière important sur les roues motrices.

La chaîne de traction selon l'invention peut de plus comporter une ou plusieurs des caractéristiques suivantes, qui peuvent être combinées entre elles.

Avantageusement, le moyen commandé de fermeture des accumulateurs haute pression est une vanne comportant deux états ouvert et fermé, ou plusieurs états d'ouverture permettant de calibrer un débit.

En particulier, le moteur thermique peut être relié à la couronne du train planétaire, et le pignon solaire à la pompe.

Avantageusement, la liaison entre le pignon solaire et la pompe comporte une démultiplication réduisant la vitesse de cette pompe.

Selon un mode de réalisation, la pompe est fixée en bout d'un arbre de pompe disposé parallèlement à l'arbre du pignon solaire, ces deux arbres étant reliés entre eux par un couple de pignons donnant la démultiplication.

Avantageusement, le porte-satellites est relié en permanence au différentiel.

Avantageusement, la machine hydraulique est reliée au différentiel par un unique rapport de démultiplication.

II est divulgué également un procédé de commande d'une chaîne de traction comprenant l'une quelconque des caractéristiques précédentes, dans lequel, pour obtenir un démarrage du véhicule en marche arrière avec un couple élevé délivré par la machine hydraulique, il démarre le moteur thermique afin de réaliser un entraînement de la pompe, il ouvre le passage direct entre cette pompe et la machine hydraulique, et il ferme le moyen de fermeture des accumulateurs haute pression.

L'invention a de plus pour objet un véhicule automobile hybride comportant une chaîne de traction comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en coupe d'une transmission prévue pour une chaîne cinématique selon l'invention, suivant le plan de coupe I-I passant par cinq axes de ses arbres parallèles ;
- la figure 2 est une vue en coupe de cette transmission, suivant le plan de coupe II-II passant par deux axes de ses arbres parallèles, et
- la figure 3 présente une vue de la face de cette transmission opposée au moteur thermique.

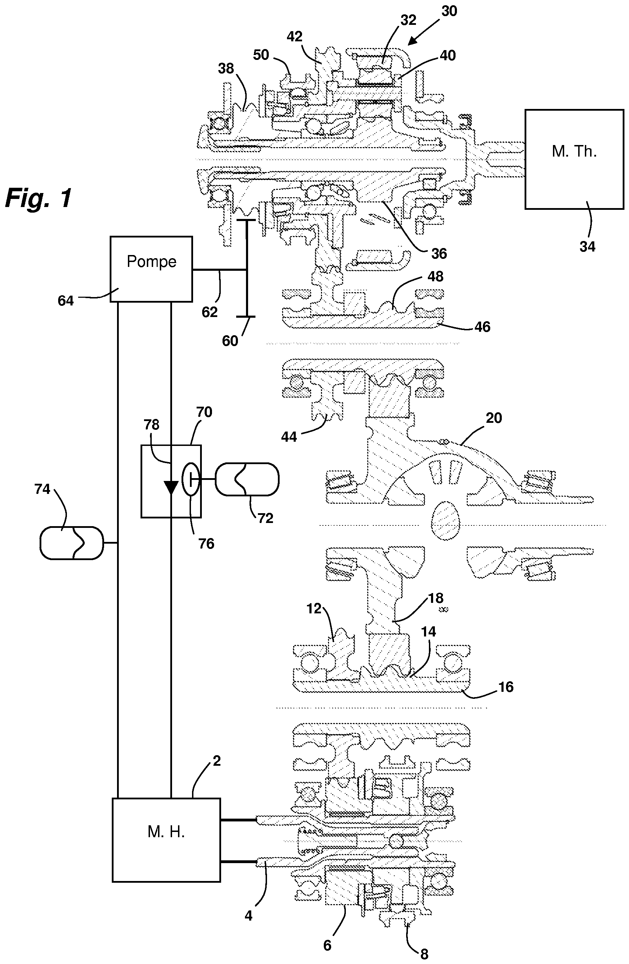

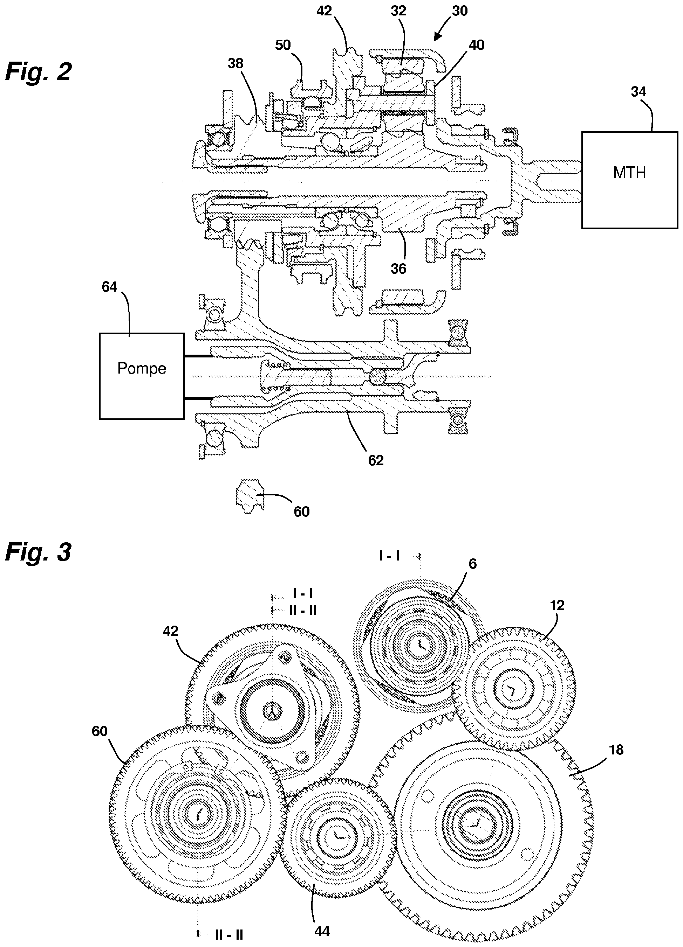

Les figures 1 à 3 présentent une transmission comprenant six arbres disposés parallèlement entre eux.

Une machine hydraulique à cylindrée variable 2 est reliée à un premier arbre d'entrée 4 de cette transmission, supportant un pignon menant libre en rotation 6 qui peut être lié à cet arbre d'entrée par un premier manchon de synchronisation 8 quand il est engagé. En variante on peut disposer plusieurs machines hydrauliques reliées entre elles, pour augmenter la puissance délivrée.

Le pignon menant 6 du premier arbre d'entrée 4 engrène avec un pignon mené 12 qui est lié à un premier arbre intermédiaire 16, comportant un premier pignon de sortie 14 directement usiné dessus. Ce premier pignon de sortie 14 engrène avec la couronne 18 d'un différentiel de sortie 20, répartissant le mouvement vers les deux roues motrices d'un véhicule.

On obtient ainsi la possibilité d'entraîner directement les roues motrices du véhicule par la machine hydraulique 2, quand le premier manchon de synchronisation 8 est engagé. La liaison entre la machine hydraulique 2 et les roues motrices, se fait alors avec un unique rapport défini par les deux engrènements successifs

Un moteur thermique 34 entraîne directement la couronne extérieure 32 d'un train planétaire 30, comprenant un pignon solaire central 36 qui est usiné sur un arbre recevant un pignon fixe 38.

Le train planétaire 30 comporte un porte-satellites 40 comprenant des pignons satellites engrenant à la fois sur la couronne 32 et le pignon solaire 36, ce porte-satellites étant lié à un pignon fixe menant 42.

Un deuxième manchon de synchronisation 50 disposé axialement entre le pignon fixe menant 42 du porte-satellites 40, et le pignon fixe 38 de l'arbre du pignon solaire 36, peut lier ce porte-satellites avec ce pignon solaire quand il est engagé. Le train planétaire 30 est alors bloqué, ses éléments tournant à la même vitesse.

Le pignon fixe menant 42 du porte-satellites 40, engrène avec un pignon fixe mené 44 qui est lié à un deuxième arbre intermédiaire 46 comportant un deuxième pignon de sortie 48 directement usiné dessus. Ce deuxième pignon de sortie 48 engrène avec la couronne 18 du différentiel de sortie 20.

On obtient ainsi la possibilité d'entraîner directement les roues motrices du véhicule par le moteur thermique 34, quand le deuxième manchon de synchronisation 50 est engagé. La liaison entre le moteur thermique 34 et les roues motrices se fait alors avec un rapport de démultiplication défini par les deux engrènements successifs, comportant une faible démultiplication. Ce rapport est le rapport le plus long, il est mis en œuvre pour les vitesses élevées du véhicule, avec un bon rendement car utilisant uniquement une transmission mécanique comprenant seulement deux engrènements.

Le pignon fixe 38 de l'arbre du pignon solaire 36, engrène avec un pignon mené 60 usiné directement sur un arbre de pompe 62 lié en permanence à une pompe hydraulique à cylindrée variable 64.

Quand le deuxième manchon de synchronisation 50 est désengagé, le train planétaire 30 agit comme un différentiel qui répartit le couple délivré par le moteur thermique 34, et donne un premier couple appliqué par le porte-satellites 40 sur le différentiel de sortie 20, et un deuxième couple appliqué par le pignon solaire 36 sur la pompe 64.

La pompe 64 ainsi que la machine hydraulique 2 sont connectées par un circuit hydraulique à un bloc de commande 70 qui est relié à des accumulateurs haute pression 72. On peut en particulier utiliser un unique accumulateur haute pression 72, ou plusieurs accumulateurs connectés entre eux.

Le bloc de commande 70 comporte une position présentée sur la figure 1, comprenant un moyen commandé établissant un passage direct 78 de la pompe 64 vers la machine hydraulique 2, et un moyen commandé de fermeture du passage vers les accumulateurs haute pression 72, réalisé par une vanne de fermeture 76.

La machine hydraulique 2 et la pompe hydraulique 64 ont toutes les deux un retour vers des accumulateurs basse pression 74.

La vanne de fermeture 76 peut être une vanne comportant deux états ouvert et fermé, ou une vanne comprenant plusieurs états d'ouvertures intermédiaires permettant de calibrer un débit.

Dans la position présentée comprenant l'ouverture du passage direct 78 et la fermeture des accumulateurs haute pression 72, la pression et le débit générés par la pompe 64 sont intégralement transmis sans décalage de temps à la machine hydraulique 2.

Dans d'autres positions du bloc de commande 70 réalisées suivant le mode de fonctionnement de la chaîne de traction, la pompe 64 ou la machine hydraulique 2 peut être individuellement reliée aux accumulateurs haute pression 72, ou ces trois éléments peuvent être reliés ensemble. En particulier, la pompe hydraulique 64 peut recharger les accumulateurs haute pression 72, qui fournissent une énergie à la machine hydraulique 2 afin de délivrer un couple sur les roues motrices.

Les accumulateurs haute pression 72 comportent un niveau variable de pression compris entre un minimum et un maximum. En pratique on utilise un niveau minimum de pression de l'ordre de 140bars, qui permet de conserver un certain niveau de couple sur la machine hydraulique 2 et la pompe 64. On choisit aussi un niveau maximum de pression de 350bars, permettant d'utiliser du matériel correspondant à cette classe de pression qui est largement répandu, et fabriqué en grande série de manière économique.

Pour obtenir un entraînement des roues motrices par le moteur thermique 34 avec une démultiplication continûment variable, on règle la cylindrée de la pompe hydraulique 64 de manière à ajuster son couple résistant, qui dépend de cette cylindrée et aussi de la pression dans cette pompe. Le deuxième manchon de synchronisation 50 est désengagé,

Avec un couple résistant sensiblement nul sur la pompe hydraulique 64, donné par une cylindrée égale à zéro, le pignon solaire 36 peut tourner librement, la rotation du moteur thermique 34 n'entraîne pas le porte-satellites 40. On obtient un point mort qui permet de laisser le moteur thermique 34 tourner au ralenti avec le véhicule à l'arrêt.

En augmentant progressivement la cylindrée de la pompe hydraulique 64, on augmente aussi son couple résistant qui est transmis au pignon solaire 36, ce qui génère par réaction un couple sur le porte-satellites 40, transmis au différentiel 20. On peut ainsi démarrer le véhicule à partir de l'arrêt, et augmenter progressivement sa vitesse. On notera que le moteur thermique 34 peut rester à une vitesse sensiblement constante, en faisant varier de manière continue la démultiplication entraînant le différentiel 20.

Pendant le même temps la rotation de la pompe hydraulique 64 avec son couple résistant, génère un débit hydraulique avec une certaine pression qui permet de recharger les accumulateurs haute pression 72. Ce débit hydraulique peut aussi être fourni totalement, ou partiellement si on continue à recharger les accumulateurs haute pression 72, à la machine hydraulique 2 qui ajoute un couple moteur sur le différentiel 20 s'additionnant à celui délivré par le moteur thermique 34 sur le porte-satellites 40.

La marche arrière est obtenue en engageant le premier manchon de synchronisation 8, et en commandant la machine hydraulique 2 pour obtenir une rotation en sens inverse, afin de transmettre cette rotation inversée au différentiel 20.

Dans le cas d'une alimentation de la machine hydraulique 2 par les accumulateurs haute pression 72, le couple délivré par cette machine dépendant directement de la pression dans ces accumulateurs, entre 140 et 350bars, est variable, et peut être insuffisant.

Pour remonter la pression dans les accumulateurs haute pression 72, on peut démarrer le moteur thermique 34 en laissant le deuxième manchon de synchronisation 50 désengagé, afin d'entraîner la pompe 64. Pour cela le couple appliqué sur la couronne 32 est transmis au pignon solaire 36 en prenant un appui de réaction sur le porte-satellites 40, qui reçoit un certain couple.

Toutefois la montée de la pression dans les accumulateurs haute pression 72 est relativement lente, dépendant du volume à remplir dans ces accumulateurs. Le couple délivré par la machine hydraulique 2 n'augmente que lentement. De plus la pression maximum est limitée par la classe de pression des accumulateurs haute pression 72, qui est dans ce cas de 350bars.

Selon un procédé de commande de la chaîne de traction suivant l'invention, on actionne le bloc de commande 70 de manière à réaliser le passage direct 78 de la pompe 64 vers la machine hydraulique 2, et la fermeture de l'alimentation des accumulateurs haute pression 72 par la vanne de fermeture 76.

De cette manière tout le fluide délivré par la pompe 64 est fourni à la machine hydraulique 2 sans passer par les accumulateurs haute pression 72, ce qui permet une montée en pression très rapide, pouvant sans problème dépasser les 350 bars.

La machine hydraulique 2 peut alors sans délai générer un couple important sur le différentiel 20, qui même en tenant compte d'un couple opposé venant de la réaction appliquée sur le porte-satellites 40, donne un couple élevé sur les roues motrices. Le véhicule peut démarrer en marche arrière sur une forte montée.

On peut de la même manière réaliser une commande de la chaîne de traction pour un démarrage du véhicule en marche avant avec un couple important délivré sur les roues motrices, en demandant un couple élevé à la machine hydraulique 2 recevant directement la pression hydraulique de la pompe 64 sans passer par les accumulateurs haute pression 72, auquel s'ajoute un certain couple venant de la réaction sur le porte-satellites 40 du train planétaire 30.

On obtient de plus une transmission nettement plus simple que celle présentée par le document suivant l'art antérieur, comprenant seulement deux manchons de synchronisation au lieu de trois, ce qui simplifie la gestion de cette transmission, augmente la fiabilité, et réduit l'encombrement ainsi que les coûts.

Par ailleurs la pompe 64 tourne moins vite grâce à la démultiplication entre le pignon solaire 36 du train planétaire 30 et l'arbre de pompe 62, donnée par le couple de pignons 38, 60, ce qui réduit les bruits générés par cette pompe, et augmente sa durée de vie.

Avantageusement ce type de transmission est implanté à l'avant du véhicule automobile, le moteur thermique 34 étant disposé transversalement.

## Revendications

1. Chaîne de traction pour un véhicule automobile hybride, comprenant un moteur thermique (34), ainsi qu'une machine hydraulique (2) et une pompe hydraulique (64) qui peuvent être connectées par un circuit hydraulique à des accumulateurs haute pression (72), cette chaîne de traction comprenant de plus une transmission comportant un différentiel de sortie (20) relié directement à la machine hydraulique via un premier manchon de synchronisation (8) quand il est engagé, un train planétaire (30) disposant d'une couronne extérieure (32), d'un porte-satellites (40) et d'un pignon solaire (36), ce porte-satellites étant relié au différentiel, et un deuxième manchon de synchronisation (50) pouvant lier ce porte-satellites (40) avec ce pignon solaire (36) quand il est engagé, la couronne et le pignon solaire étant relié l'un au moteur thermique et l'autre à la pompe, dans laquelle le circuit hydraulique comporte des moyens commandés réalisant un passage direct (78) entre la pompe (64) et la machine hydraulique (2), et une fermeture (76) des accumulateurs haute pression (72), **caractérisée en ce que** le moyen commandé réalisant un passage direct (78) et le moyen commandé de fermeture (76) sont compris dans un même bloc de commande (70).

2. Chaîne de traction selon la revendication 1, **caractérisée en ce que** le moyen commandé de fermeture (76) des accumulateurs haute pression (72) est une vanne comportant deux états ouvert et fermé, ou plusieurs états d'ouverture permettant de calibrer un débit.

3. Chaîne de traction selon l'une quelconque des revendications précédentes, **caractérisée en ce que** le moteur thermique (34) est relié à la couronne (32) du train planétaire (30), et le pignon solaire (36) est relié à la pompe (64).

4. Chaîne de traction selon l'une quelconque des revendications précédentes, **caractérisée en ce que** la liaison entre le pignon solaire (36) et la pompe (64) comporte une démultiplication réduisant la vitesse de cette pompe.

5. Chaîne de traction selon la revendication 4, **caractérisée en ce que** la pompe (64) est fixée en bout d'un arbre de pompe (62) disposé parallèlement à l'arbre du pignon solaire (36), ces deux arbres étant reliés entre eux par un couple de pignons (38, 60) donnant la démultiplication.

6. Chaîne de traction selon l'une quelconque des revendications précédentes, **caractérisée en ce que** le porte-satellites (40) est relié en permanence au différentiel (20).

7. Chaîne de traction selon l'une quelconque des revendications précédentes, **caractérisée en ce que** la machine hydraulique (2) est reliée au différentiel (20) par un unique rapport de démultiplication.

8. Véhicule automobile hybride, **caractérisé en ce qu'**il comporte une chaîne de traction réalisée selon l'une quelconque des revendications 1 à 7.

## Patentansprüche

1. Traktionskette für ein Hybridkraftfahrzeug, bestehend aus einer Wärmekraftmaschine (34) sowie einer Hydraulikmaschine (2) und einer Hydraulikpumpe (64), die über einen Hydraulikkreis mit Hochdruckspeichern (72) verbunden werden können; Diese Traktionskette umfasst ferner ein Getriebe, das ein Ausgangsdifferential (20) umfasst, das direkt mit der Hydraulikmaschine über eine erste Synchronisationshülse (8) verbunden ist, wenn sie eingerückt ist, wobei ein Planetenrad (30) einen Außenring (32) einen Planetenträger (40) und ein Sonnenrad (36), wobei dieser Planetenträger mit dem Differential verbunden ist, und eine zweite Synchronisationshülse (50), mit der dieser Planetenträger (40) verbunden werden kann dieses Sonnenrad (36), wenn es eingerückt ist, wobei die Krone und das Sonnenrad eines mit der Wärmekraftmaschine und das andere mit der Pumpe verbunden sind, wobei der Hydraulikkreis geregelte Mittel umfasst, die einen direkten Durchgang (78) bereitstellen zwischen der Pumpe (64) und der Hydraulikmaschine (2) und einem Verschluss (76) der Hochdruckspeicher (72), der **dadurch gekennzeichnet ist, dass** das gesteuerte Mittel einen direkten Durchgang (78) erzeugt und das gesteuerte Schließmittel (76) sind in derselben Steuereinheit (70) enthalten.

2. Traktionskette nach Anspruch 1, **dadurch gekennzeichnet, dass** das gesteuerte Schließmittel (76) der Hochdruckspeicher (72) ein Ventil ist, das zwei offene und geschlossene Zustände oder mehrere offene Zustände umfasst, die es ermöglichen, eine Durchflussrate zu kalibrieren.

3. Traktionskette nach einem der vorhergehenden Ansprüche, **dadurch gekennzeichnet, dass** die Wärmekraftmaschine (34) mit dem Zahnkranz (32) des Planetenrads (30) und das Sonnenrad (36) mit der Pumpe (64).

4. Traktionskette nach einem der vorhergehenden Ansprüche, **dadurch gekennzeichnet, dass** die Verbindung zwischen dem Sonnenrad (36) und der Pumpe (64) ein Untersetzungsgetriebe umfasst, das die Drehzahl dieser Pumpe verringert.

5. Traktionskette nach Anspruch 4, **dadurch gekennzeichnet, dass** die Pumpe (64) am Ende einer parallel zur Sonnenradwelle (36) angeordneten Pumpenwelle (62) befestigt ist, wobei diese beiden Wellen miteinander verbunden sind durch ein Paar Ritzel (38, 60), die die Reduktion ergeben.

6. Traktionskette nach einem der vorhergehenden Ansprüche, **dadurch gekennzeichnet, dass** der Planetenträger (40) dauerhaft mit dem Differential (20) verbunden ist.

7. Traktionskette nach einem der vorhergehenden Ansprüche, **dadurch gekennzeichnet, dass** die Hydraulikmaschine (2) über ein einziges Übersetzungsverhältnis mit dem Differential (20) verbunden ist.

8. Hybridkraftfahrzeug, **dadurch gekennzeichnet, dass** es eine Traktionskette umfasst, die gemäß einem der Ansprüche 1 bis 7 hergestellt ist.

## Claims

1. Traction sytem for a hybrid motor vehicle, comprising a heat engine (34), as well as a hydraulic machine (2) and a hydraulic pump (64) which can be connected by a hydraulic circuit to high pressure accumulators (72), this traction chain further comprising a transmission comprising an output differential (20) connected directly to the hydraulic machine via a first synchronization sleeve (8) when it is engaged , a planetary train (30) having a crown exterior (32), a planet carrier (40) and a sun gear (36), this planet carrier being connected to the differential, and a second synchronization sleeve (50) capable of connecting this planet carrier (40) with this sun gear (36) when it is engaged, the crown and the sun gear being connected one to the heat engine and the other to the pump, in which the hydraulic circuit comprises controlled means providing a direct passage (78) between the pump (64) and the hydraulic machine (2), and a closure (76) of the high pressure accumulators (72), **characterized in that** the controlled means providing a direct passage (78) and the controlled closing means (76) are included in the same control block (70).

2. Traction system according to Claim 1, **characterized in that** the closing control means (76) of the high-pressure reservoirs (72) is a valve having both open and closed states, or several states of opening for calibrating a debit.

3. Traction system according to one of the preceding claims, **characterized in that** the engine (34) is connected to the crown (32) of the planetary gear (30) and the sun gear (36) is connected to the pump (64).

4. Traction system according to one of the preceding claims, **characterized in that** that the connection between the sun gear (36) and the pump (64) includes a gear reducing the speed of the pump.

5. Traction system according to Claim 4 , **characterized in that** the pump (64) is fixed at the end of a shaft pump (62) arranged parallel to the shaft of the sun gear (36), these two shafts being connected between them by a pair of pinions (38, 60) giving gear reduction.

6. Traction chain according to any one of the preceding claims, **characterized in that** the planet carrier (40) is permanently connected to the differential (20).

7. Traction chain according to any one of the preceding claims, **characterized in that** the hydraulic machine (2) is connected to the differential (20) by a single gear ratio.

8. Hybrid motor vehicle, **characterized in that** it comprises a traction system produced according to any one of claims 1 to 7.
